# EUROPEAN PATENT APPLICATION

(11) **EP 2 542 016 A2**
(43) Date of publication of application: **02.01.2013**
(21) Application number: 12173248.1
(22) Date of filing: 22.06.2012
(51) Int. Cl.: H04W 84/18

(54) **Apparatus and method for enhancing wireless mesh network communications**

(30) Priority: 27.06.2011 US 201113169657
(71) Applicant: General Electric Company, Schenectady, NY 12345 (US)
(72) Inventor: Nikkels, Robert R., Minden, Nevada 89423 (US)
(74) Representative: Picker, Madeline Margaret

(57) **Abstract**

A wireless mesh network includes at least one data collection device (105). The wireless mesh network also includes a plurality of directional antennas (280) operatively coupled to each other and the at least one data collection device. The wireless mesh network is configured to transmit information with a data rate of approximately 250 Kilobits per second (Kbits/sec) or less, and at a frequency of approximately 2.4 GigaHertz (GHz) or less.

## Description

### BACKGROUND OF THE INVENTION

The embodiments described herein relate generally to wireless communications and, more particularly, to methods and apparatus for enhancing communications transmitted via wireless mesh networks.

Many known communications networks are configured as wireless mesh networks (WMNs). Such WMNs include a plurality of radio nodes organized in a mesh topology. At least some known WMNs are wireless broadband networks, sometimes referred to as Wi-Fi networks, that use the Institute of Electrical and Electronics Engineers (IEEE) standard 802.16^{™}. Such Wi-Fi networks transmit large volumes of information in excess of 10 Megabits per second (Mbits/sec) and operate in frequency ranges in excess of 2.4 GigaHertz (GHz). Also, such Wi-Fi networks use omnidirectional antennas, directional antennas, or a combination thereof, and are known to have a relatively high rate of power consumption, e.g., in excess of 400 milliamperes (mA) per network device.

In addition, at least some known WMNs use either the ZigBee^{®} specification or the WirelessHART^{™} standard, both based on the IEEE standard 802.15.4^{™} for low-rate wireless networks. Such low-rate wireless networks transmit relatively small volumes of information, e.g., approximately 250 Kilobits per second (Kbits/sec) or less. Such low-rate wireless networks operate with frequencies of approximately 2.4 GigaHertz (GHz) or less. Also, such low-rate wireless networks have a relatively low rate of power consumption as compared to the Wi-Fi networks, e.g., less than 50 mA per device.

Such low-rate wireless networks are less complex, cost-effective substitutes for the more expensive Wi-Fi networks, and are used in industrial facilities where network traffic is typically limited to sensor information. However, such known low-rate wireless networks use omnidirectional antennas exclusively. Such omnidirectional antennas have a range of approximately 25 meters (m) (82 feet (ft)). Moreover, many industrial facilities are positioned in regions with rugged landscapes and may require a large number of omnidirectional antennas, each placed within 50 m of each other, thereby increasing costs and complexity of installation. Also, some extremely rugged terrain may substantially exclude the use of omnidirectional antennas.

### BRIEF DESCRIPTION OF THE INVENTION

In one aspect, a wireless mesh network is provided. The wireless mesh network includes at least one data collection device. The wireless mesh network also includes a plurality of directional antennas operatively coupled to each other and the at least one data collection device. The wireless mesh network is configured to transmit information with a data rate of approximately 250 Kilobits per second (Kbits/sec) or less, and at a frequency of approximately 2.4 GigaHertz (GHz) or less.

In another aspect, a method of assembling a network is provided. The method includes providing at least one data collection device and providing a plurality of directional antennas. The method also includes operatively coupling at least one of the plurality of directional antennas to the at least one data collection device. The network is configured to transmit information with a data rate of approximately 250 Kilobits per second (Kbits/sec) or less, and at a frequency of approximately 2.4 GigaHertz (GHz) or less.

In yet another aspect, a monitoring system is provided. The monitoring system includes at least one sensor measurement device and at least one data collection device. The monitoring system also includes a wireless mesh network coupled to the at least one data collection device and the at least one sensor measurement device. The wireless mesh network includes a plurality of directional antennas operatively coupled to each other and to the at least one data collection device. The wireless mesh network is configured to transmit information with a data rate of approximately 250 Kilobits per second (Kbits/sec) or less, and at a frequency of approximately 2.4 GigaHertz (GHz) or less.

### BRIEF DESCRIPTION OF THE DRAWINGS

The embodiments described herein may be better understood by referring to the following description in conjunction with the accompanying drawings.
FIG. 1 is a block diagram of an example computing device that may be used to monitor and/or control the operation of a machine;
FIG. 2 is block diagram of an example machine monitoring system that includes a machine controller, and a facility controller coupled in communication via a portion of a network;
FIG. 3 is a schematic view of the machine monitoring system shown in FIG. 2;
FIG. 4 is a schematic view of a plurality of example omnidirectional antennas that may be used with the monitoring system shown in FIG. 3;
FIG. 5 is a schematic view of a plurality of directional antennas that may be used with the monitoring system shown in FIG. 3;
FIG. 6 is a schematic view of the omnidirectional antennas shown in FIG. 4 and the directional antennas shown in FIG. 5 integrated in the monitoring system shown in FIG. 2; and
FIG. 7 is a flow chart of an example method of assembling the network shown in FIG. 6.

### DETAILED DESCRIPTION OF EMBODIMENTS OF THE INVENTION

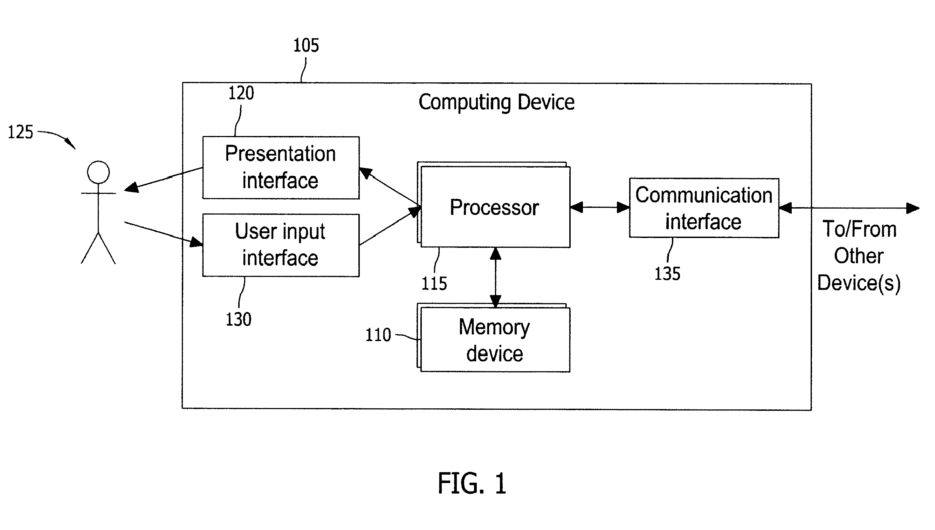

FIG. 1 is a block diagram of an example computing device 105 that may be used to monitor and/or control the operation of a machine (not shown in FIG. 1). In some embodiments, computing device 105 is a data collection device. Computing device 105 includes a memory device 110 and a processor 115 operatively coupled to memory device 110 for executing instructions. In some embodiments, executable instructions are stored in memory device 110. Computing device 105 is configurable to perform one or more operations described herein by programming processor 115.

For example, processor 115 may be programmed by encoding an operation as one or more executable instructions and providing the executable instructions in memory device 110. Processor 115 may include one or more processing units (e.g., in a multicore configuration).

In the example embodiment, memory device 110 is one or more devices that enable storage and retrieval of information such as executable instructions and/or other data. Memory device 110 may include one or more computer readable media, such as, without limitation, random access memory (RAM), dynamic random access memory (DRAM), static random access memory (SRAM), a solid state disk, a hard disk, read-only memory (ROM), erasable programmable ROM (EPROM), electrically erasable programmable ROM (EEPROM), and/or non-volatile RAM (NVRAM) memory. The above memory types are example only, and are thus not limiting as to the types of memory usable for storage of a computer program.

Further, as used herein, the terms "software" and "firmware" are interchangeable, and include any computer program stored in memory for execution by personal computers, workstations, clients and servers.

Memory device 110 may be configured to store operational measurements including, without limitation, vibration readings, field voltage and current readings, field reference setpoints, stator voltage and current readings, rotor speed readings, maintenance tasks, and/or any other type of data. In some embodiments, processor 115 removes or "purges" data from memory device 110 based on the age of the data. For example, processor 115 may overwrite previously recorded and stored data associated with a subsequent time and/or event. In addition, or alternatively, processor 115 may remove data that exceeds a predetermined time interval.

In some embodiments, computing device 105 includes a presentation interface 120 coupled to processor 115. Presentation interface 120 presents information, such as a user interface and/or an alarm, to a user 125. For example, presentation interface 120 may include a display adapter (not shown) that may be coupled to a display device (not shown), such as a cathode ray tube (CRT), a liquid crystal display (LCD), an organic LED (OLED) display, and/or an "electronic ink" display. In some embodiments, presentation interface 120 includes one or more display devices. In addition, or alternatively, presentation interface 120 may include an audio output device (not shown) (e.g., an audio adapter and/or a speaker) and/or a printer (not shown). In some embodiments, presentation interface 120 presents an alarm associated with a synchronous machine (not shown in FIG. 1), such as by using a human machine interface (HMI) (not shown).

In some embodiments, computing device 105 includes a user input interface 130. In the example embodiment, user input interface 130 is coupled to processor 115 and receives input from user 125. User input interface 130 may include, for example, a keyboard, a pointing device, a mouse, a stylus, a touch sensitive panel (e.g., a touch pad or a touch screen), a gyroscope, an accelerometer, a position detector, and/or an audio input interface (e.g., including a microphone). A single component, such as a touch screen, may function as both a display device of presentation interface 120 and user input interface 130.

A communication interface 135 is coupled to processor 115 and is configured to be coupled in communication with one or more other devices, such as a sensor or another computing device 105, and to perform input and output operations with respect to such devices. For example, communication interface 135 may include, without limitation, a wired network adapter, a wireless network adapter, a mobile telecommunications adapter, a serial communication adapter, and/or a parallel communication adapter. Communication interface 135 may receive data from and/or transmit data to one or more remote devices. For example, a communication interface 135 of one computing device 105 may transmit an alarm to the communication interface 135 of another computing device 105.

Presentation interface 120 and/or communication interface 135 are both capable of providing information suitable for use with the methods described herein (e.g., to user 125 or another device). Accordingly, presentation interface 120 and communication interface 135 may be referred to as output devices. Similarly, user input interface 130 and communication interface 135 are capable of receiving information suitable for use with the methods described herein and may be referred to as input devices.

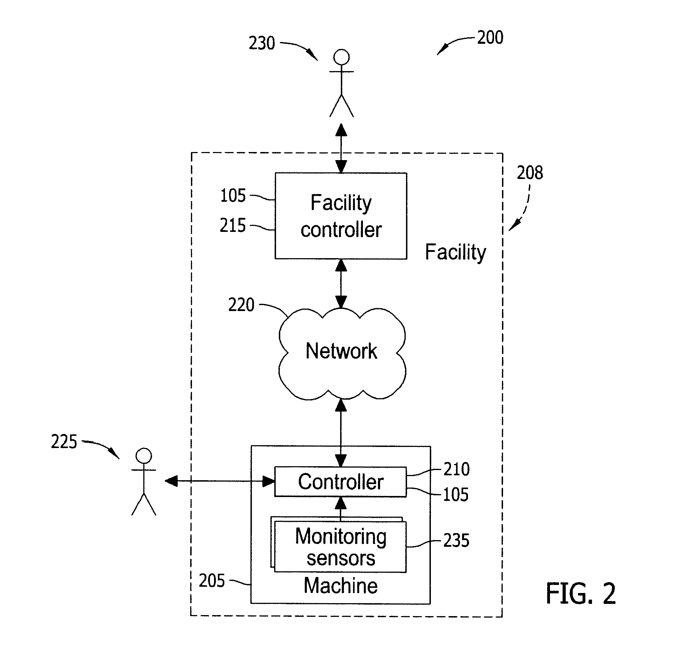

FIG. 2 is block diagram of an example system 200 that may be used to monitor and/or operate a machine 205. In some embodiments, system 200 is one of a data acquisition system (DAS) and/or a supervisory control and data acquisition system (SCADA). Machine 205 may be any industrial equipment for any industrial process, including, without limitation, a chemical process reactor, a heat recovery steam generator, a steam turbine, a gas turbine, a switchyard circuit breaker, and a switchyard transformer. In the example embodiment, machine 205 is a portion of a larger, integrated industrial facility 208. Facility 208 may include, without limitation, multiple units of machine 205. Also, in the example embodiment, facility 208 includes rugged geographic terrain including, without limitation, mountainous terrain and extended waterways (not shown). Further, in the example embodiment, system 200 includes a machine controller 210 and a facility controller 215 coupled in communication with each other via a network 220.

In the example embodiment, network 220 is a radio mesh network, or more specifically, a low-rate wireless mesh network (WMN) that uses the ZigBee^{®} specification. ZigBee^{®} is a registered trademark of the ZigBee Alliance, San Ramon, California, U.S.A. Alternatively, network 220 is a low-rate WMN that uses the WirelessHART^{™} standard based on the Highway Addressable Remote Transducer (HART^{®}) protocol. WirelessHART^{™} is a trademark and HART^{®} is a registered trademark of the HART Communication Foundation, Austin, Texas, U.S.A. Both the WirelessHART^{™} standard and the ZigBee^{®} specification are based on the Institute of Electrical and Electronics Engineers (IEEE) standard 802.15.4^{™}. Alternatively, any low-rate specification, standard, and/or protocol that is based on IEEE standard 802.15.4^{™} that enables operation of network 220 as described herein is used. IEEE standard 802.15.4^{™} is a trademark of the IEEE Standards Association, Piscataway, New Jersey, U.S.A.

Low-rate wireless network 220 transmits relatively small volumes of information, i.e., approximately, or less than, 250 Kilobits per second (Kbits/sec) and at a frequency of approximately, or less than, 2.4 GHz. Embodiments of network 220 may include, without limitation, the Internet, a local area network (LAN), a wide area network (WAN), a wireless LAN (WLAN), and/or a virtual private network (VPN). While certain operations are described below with respect to particular computing devices 105, it is contemplated that any computing device 105 may perform one or more of the described operations. For example, controller 210 and controller 215 may perform all of the operations below.

Referring to FIGs. 1 and 2, machine controller 210, and facility controller 215 are computing devices 105. In the example embodiment, each computing device 105 is coupled to network 220 via communication interface 135. In an alternative embodiment, controller 210 is integrated with controller 215.

Controller 210 interacts with a first operator 225 (e.g., via user input interface 130 and/or presentation interface 120). For example, controller 210 may present information about machine 205, such as alarms, to operator 225. Facility controller 215 interacts with a second operator 230 (e.g., via user input interface 130 and/or presentation interface 120). For example, facility controller 215 may present alarms and/or maintenance tasks to second operator 230. As used herein, the term "operator" includes any person in any capacity associated with operating and maintaining facility 208, including, without limitation, shift operations personnel, maintenance technicians, and facility supervisors.

Machine 205 includes one or more monitoring sensors 235. In example embodiments, monitoring sensors 235 collect operational measurements including, without limitation, vibration readings, field voltage and current readings, field reference setpoints, stator voltage and current readings, rotor speed readings, maintenance tasks, and/or any other type of data. Monitoring sensors 235 repeatedly (e.g., periodically, continuously, and/or upon request) transmits operational measurement readings at the current time. For example, monitoring sensors 235 may produce an electrical current between a minimum value (e.g., 4 milliamps (ma)) and a maximum value (e.g., 20 ma). The minimum value is representative of an indication that no field current is detected. The maximum value is representative of an indication that the highest detectable amount of field current is detected. Controller 210 receives and processes the operational measurement readings.

Facility 208 includes additional monitoring sensors (not shown) similar to monitoring sensors 235 that collect operational data measurements associated with the remainder of facility 208 including, without limitation, data from redundant machines 205 and facility environmental data, including, without limitation, local wind speed, local wind velocity, and local outside temperatures. Such data is transmitted across network 220 and may be accessed by any device capable of accessing network 220 including, without limitation, desktop computers, laptop computers, and personal digital assistants (PDAs) (neither shown).

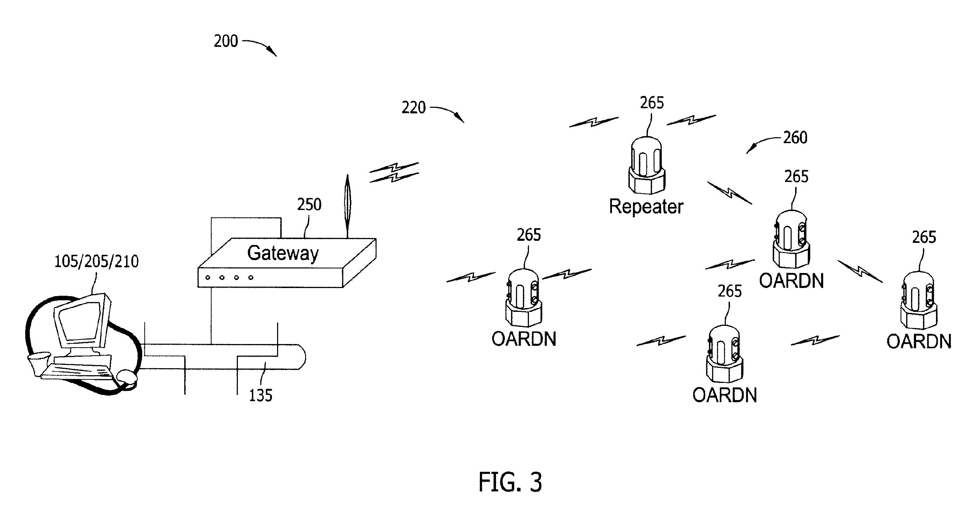

FIG. 3 is a schematic view of machine monitoring system 200. In the example embodiment, computing device 105 is one of machine controller 210 and/or facility controller 215. Also, in the example embodiment, each computing device 105 is coupled to network 220 via communication interface 135. Network 220 includes a gateway device 250, wherein device 250 is any gateway device that enables communication within network 220 as described herein, including, without limitation, a router, a modem, and a switch. Network 220 also includes a first portion 260 of wireless mesh network 220. First portion 260 includes a plurality of radio data nodes with at least one omnidirectional antenna 265, i.e., an OARDN 265. Each OARDN 265 is a communication node, and more specifically, is one of a repeater device and, in the example embodiment, is an omnidirectional wireless sensor interface module (wSIM). Alternatively, each OARDN 265 is any omnidirectional wireless sensor interface device. At least one OARDN 265 is operatively coupled in communication with gateway device 250.

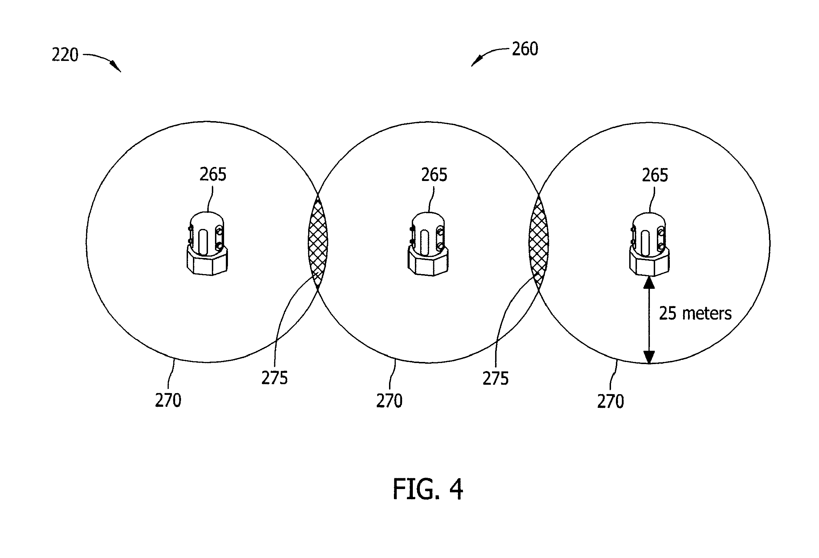

FIG. 4 is a schematic view of a plurality of OARDNs 265 that may be used with monitoring system 200. Each OARDN 265 is operatively coupled in communication with at least one adjacent OARDN 265. Also, each OARDN 265 has a range of approximately 25 meters (m) (82 feet (ft)) as indicated by range circles 270 such that an overlap region 275 is defined. Therefore, an operational distance between adjacent OARDNs 265 is approximately 50 m (164 ft) or less.

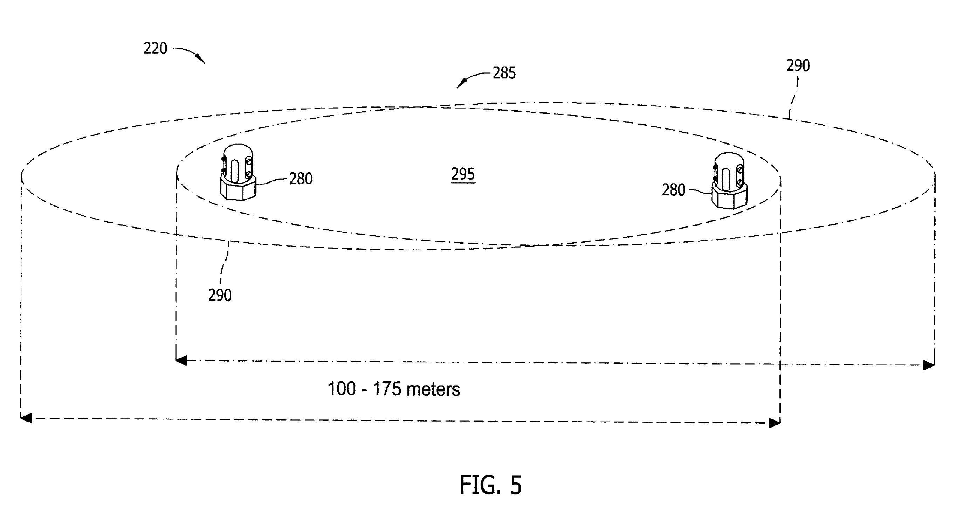

FIG. 5 is a schematic view of a plurality of radio data nodes with at least one directional antenna 280, i.e., a DARDN 280 that may be used with monitoring system 200. DARDNs 280 define a second portion 285 of network 220. Each DARDN 280 is operatively coupled in communication with an opposing and adjacent DARDN 280. Also, each DARDN 280 has a range of approximately 100 m (328 ft) to 175 m (574 ft) as indicated by range ellipses 290 such that an overlap region 295 is defined. Such ranges are associated with adjacent DARDNs 280 and may vary with other configurations that include adjacent OARDNs 265 (shown in FIG. 4). Such ranges may also vary as a function of gain values of DARDNs 280 and/or geographic location. Further, each DARDN 280 is a communication node, and more specifically, in the example embodiment, is a directional wSIM. Alternatively, each DARDN 280 is any directional wireless sensor interface device.

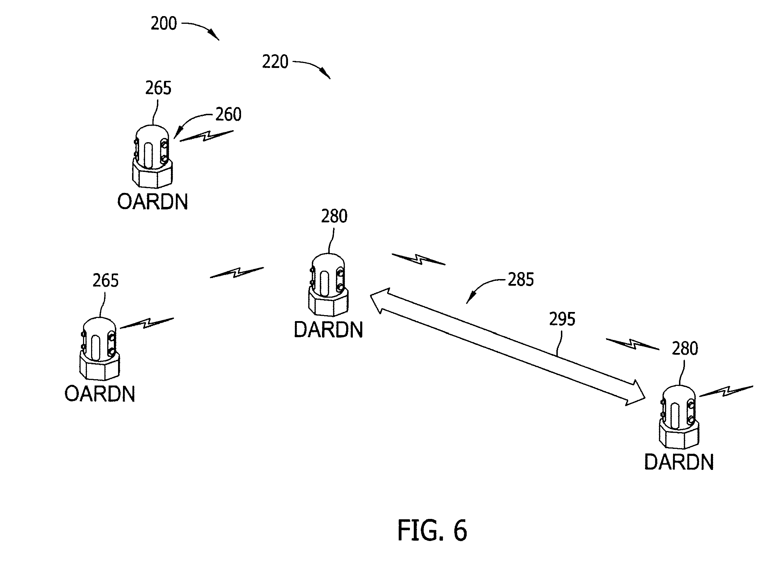

FIG. 6 is a schematic view of OARDNs 265 and DARDNs 280 integrated in monitoring system 200. First portion 260 and second portion 285 of wireless mesh network 220 are coupled such that each OARDN 265 adjacent to a first DARDN 280 are operatively coupled in communication. Moreover, first DARDN 280 and second DARDN 280 are operatively coupled in communication with each other. Furthermore, second DARDN 280 is operatively coupled in communication with additional OARDNs 265 (not shown in FIG. 6). Therefore, facility 208 (shown in FIG. 2) that includes regions with rugged landscapes that exclude use of OARDNs 265 may extend network 220 through those geographically rugged regions with use of DARDNs 280. Use of such DARDNs 280 also decreases costs and complexity of installation of network 220.

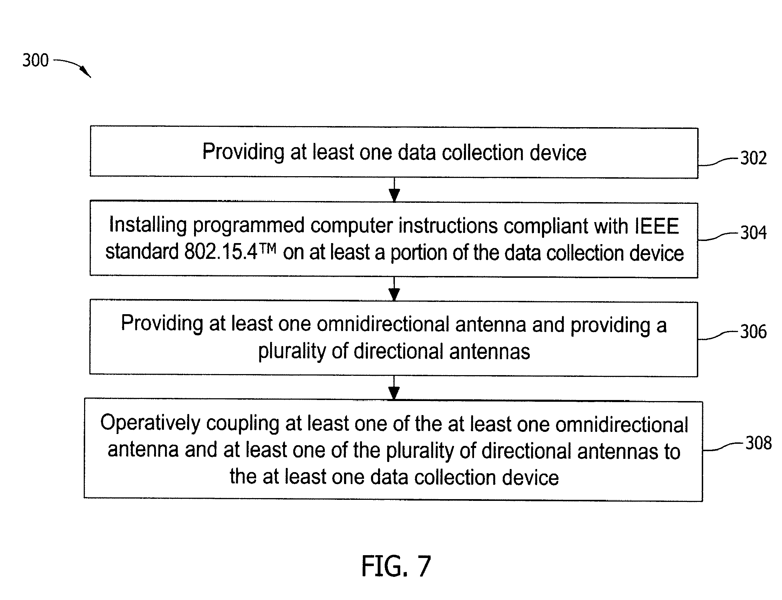

FIG. 7 is a flow chart of an example method 300 of assembling network 220 (shown in FIG. 6). In the example embodiment, at least one computing device 105/210/215 (shown in FIGs. 1, 2, and 3) is provided 302. Programmed computer instructions compliant with IEEE standard 802.15.4^{™} are installed 304 on at least a portion of computing device 105/210/215. Specifically, network 220 is a low-rate wireless mesh network that uses the ZigBee^{®} specification., or alternatively, the WirelessHART^{™} standard based on the IEEE standard 802.15.4^{™}. At least one omnidirectional antenna, i.e., OARDN 265 (shown in FIGs. 3, 4, and 6) and a plurality of directional antennas, or DARDNs 280 (shown in FIGs. 5 and 6) are provided 306. At least one of the OARDNs 265 and at least one of the plurality of DARDNs 280 are operatively coupled 308 to the computing device 105/210/215.

In contrast to known wireless mesh networks, the methods, systems, and apparatus described herein provide low cost transmission of monitoring data. Specifically, in contrast to known wireless mesh networks, the monitoring methods, systems, and apparatus described herein facilitate transmitting operational data associated with a facility to remote and/or difficult-to-access regions of the facility. More specifically, in contrast to known wireless mesh networks, the monitoring methods, systems, and apparatus described herein facilitate using transmission and receiving devices that have a low data rate and a low power usage.

An example technical effect of the methods, systems, and apparatus described herein includes at least one of (a) enabling transmission and receipt of monitoring data in remote areas of a facility that would otherwise be inaccessible with omnidirectional antennas; (b) enabling the use of low power/low data rate devices in remote and/or difficult-to-access regions of a facility such that use of such low power devices for extended periods of time is facilitated, thereby increasing the reliability of such devices and decreasing a need for fully charged backup devices; and (c) decreasing the number of, and the associated costs of, additional omnidirectional antennas.

Described herein are example embodiments of wireless mesh networks and monitoring systems that facilitate enabling transmission and receipt of monitoring data in remote and/or difficult-to-access regions of a facility. Specifically, the wireless mesh networks and monitoring systems described herein use directional antennas to facilitate extending such networks and monitoring systems through regions with rugged landscapes that exclude use of omnidirectional antennas. Also, specifically, the wireless mesh networks and monitoring systems described herein use directional antennas with low power/low data rate networks and systems to replace a greater number of omnidirectional antennas, thereby facilitating a decrease of complexity and costs of installation and operation of such of wireless mesh networks and monitoring systems.

The methods and systems described herein are not limited to the specific embodiments described herein. For example, components of each system and/or steps of each method may be used and/or practiced independently and separately from other components and/or steps described herein. In addition, each component and/or step may also be used and/or practiced with other assemblies and methods.

Some embodiments involve the use of one or more electronic or computing devices. Such devices typically include a processor or controller, such as a general purpose central processing unit (CPU), a graphics processing unit (GPU), a microcontroller, a reduced instruction set computer (RISC) processor, an application specific integrated circuit (ASIC), a programmable logic circuit (PLC), and/or any other circuit or processor capable of executing the functions described herein. The methods described herein may be encoded as executable instructions embodied in a computer readable medium, including, without limitation, a storage device and/or a memory device. Such instructions, when executed by a processor, cause the processor to perform at least a portion of the methods described herein. The above represent examples only, and thus are not intended to limit in any way the definition and/or meaning of the term processor.

While the invention has been described in terms of various specific embodiments, those skilled in the art will recognize that the invention can be practiced with modification within the scope of the claims.

## Claims

1. A wireless mesh network (220) comprising:
at least one data collection device (105); and
a plurality of directional antennas (280) operatively coupled to each other and to said at least one data collection device,
wherein said wireless mesh network is configured to transmit information with a data rate of approximately 250 Kilobits per second (Kbits/sec) or less, and at a frequency of approximately 2.4 GigaHertz (GHz) or less.

2. A wireless mesh network (220) in accordance with Claim 1 further comprising at least one omnidirectional antenna (265) operatively coupled to at least one of said at least one data collection device (105) and at least one of said plurality of directional antennas (280).

3. A wireless mesh network (220) in accordance with Claim 1 or Claim 2, wherein said plurality of directional antennas (280) comprises:
a first directional antenna (280) positioned in communications range of a first omnidirectional antenna (265); and
a second directional antenna (280) positioned in communications range of a second omnidirectional antenna (265).

4. A wireless mesh network (220) in accordance with Claim 1, 2 or 3, further comprising at least one memory device (110) and at least one processor (115) coupled to said at least one memory device, wherein said at least one memory device is configured to:
store data transmitted from at least one sensor measurement device (235); and
store programmed computer instructions to instruct said processor to transmit at least a portion of the data stored in said at least one memory device to at least one of:
said plurality of directional antennas (280); and
at least one omnidirectional antenna (265) operatively coupled to at least one of said plurality of directional antennas.

5. A wireless mesh network (220) in accordance with any one of Claims 1 to 4, wherein said plurality of directional antennas (280) transmits the portion of the data from said at least one memory device (110) in a manner compliant with Institute of Electrical and Electronics Engineers (IEEE) standard 802.15.4^{™} for low-rate wireless networks.

6. A wireless mesh network (220) in accordance with any one of Claims 1 to 5, further comprising:
a first portion (260) comprising a plurality of omnidirectional antennas (265); and
a second portion (285) comprising said plurality of directional antennas (280), wherein at least one of said plurality of directional antennas is operatively coupled to at least one of said plurality of omnidirectional antennas.

7. A wireless mesh network (220) in accordance with any one of Claims 1 to 6, wherein said plurality of directional antennas (280) comprises two directional antennas that are opposing and adjacent to each other.

8. A monitoring system (200) comprising:
at least one sensor measurement device (235);
at least one data collection device (105); and
a wireless mesh network (220) coupled to said at least one data collection device and said at least one sensor measurement device, said wireless mesh network comprising a plurality of directional antennas (280) operatively coupled to each other and to said at least one data collection device,
wherein, said wireless mesh network is configured to transmit information with a data rate of approximately 250 Kilobits per second (Kbits/sec) or less, and at a frequency of approximately 2.4 GigaHertz (GHz) or less.

9. A monitoring system (200) in accordance with Claim 8, further comprising at least one omnidirectional antenna (265) operatively coupled to at least one of said at least one data collection device (105) and at least one of said plurality of directional antennas (280).

10. A monitoring system (200) in accordance with Claim 8 or Claim 9, wherein said plurality of directional antennas (280) comprises:
a first directional antenna (280) positioned in communications range of a first omnidirectional antenna (265); and
a second directional antenna (280) positioned in communications range of a second omnidirectional antenna. (265).

11. A monitoring system in accordance with Claim 8, 9 or 10, wherein said at least one data collection device (105) comprises at least one memory device and at least one processor coupled to said at least one memory device, said at least one memory device is configured to:
store data transmitted from said at least one sensor measurement device; and
store programmed computer instructions to instruct said processor to transmit the data stored in said at least one memory device to at least one of:
said plurality of directional antennas (280); and
at least one omnidirectional antenna (265) operatively coupled to at least one of said plurality of directional antennas (280).

12. A monitoring system in accordance with any one of Claims 5 to 11, further comprising:
a first portion comprising a plurality of omnidirectional antennas (265); and
a second portion comprising said plurality of directional antennas (280), wherein at least one of said plurality of directional antennas is operatively coupled to at least one of said plurality of omnidirectional antennas;
wherein said plurality of directional antennas (280) preferably comprises two directional antennas that are opposing and adjacent to each other.

13. A method of assembling a network, said method comprising:
providing at least one data collection device;
providing a plurality of directional antennas; and
operatively coupling at least one of the plurality of directional antennas to the at least one data collection device,
wherein, network is configured to transmit information with a data rate of approximately 250 Kilobits per second (Kbits/sec) or less, and at a frequency of approximately 2.4 GigaHertz (GHz) or less.

14. A method in accordance with Claim 13, further comprising operatively coupling at least one sensor measurement device (235) to the at least one data collection device (105);
wherein providing at least one data collection device (105) preferably comprises providing at least one memory device configured to store a plurality of operational measurements transmitted from the at least one sensor measurement device, wherein the at least one memory device preferably includes programmed computer instructions, such instructions instruct the processor to transmit the plurality of operational measurements to at least one of at least one omnidirectional antenna (265) and at least one of the plurality of directional antennas (280).

15. A method in accordance with Claim 13, wherein providing a plurality of directional antennas (280) comprises providing a first portion of the network that includes two directional antennas that are opposing and adjacent to each other, and preferably with Claim 12 further comprising:
providing a second portion of the network, the second portion including a plurality of omnidirectional antennas (265); and
operatively coupling at least one of the two directional antennas (280) to at least one of the plurality of omnidirectional antennas (265).

16. A method in accordance with Claim 15, wherein operatively coupling at least one of the two directional antennas (280) to at least one of the plurality of omnidirectional antennas (265) comprises:
positioning a first directional antenna (280);
positioning a first omnidirectional antenna ((265) in communications range of the first directional antenna (280); and
positioning a second directional antenna (280) in communications range of the first directional antenna (265).
